# EUROPEAN PATENT SPECIFICATION

(11) **EP 4 695 111 B1**
(45) Date of publication and mention of the grant of the patent: **02.09.2026**
(21) Application number: 23719388.3
(22) Date of filing: 14.04.2023
(51) Int. Cl.: B60L 53/14, B60L 53/62, B60L 53/30, B60L 53/68, B60L 53/66

(54) **MONITORING SYSTEM AND METHOD**
ÜBERWACHUNGSSYSTEM UND -VERFAHREN
SYSTÈME ET PROCÉDÉ DE SURVEILLANCE

(43) Date of publication of application: 18.02.2026
(73) Proprietor: KEBA Energy Automation GmbH, 4040 Linz (AT)
(72) Inventor: MARTENS, Petrus, 9640 Kötschach-Mauthen (AT); KLAUSS, Roland, 9640 Kötschach-Mauthen (AT)
(74) Representative: SONN Patentanwälte GmbH & Co KG
(86) International application number: PCT/EP2023/059849
(87) International publication number: WO 2024/213268

(56) References cited:
- CN-U- 210 478 441
- DE-A1- 102020 121 726
- US-A1- 2020 079 236
- US-A1- 2020 118 181

## Description

The invention concerns a method for monitoring at least one state of an electric vehicle supply equipment for charging an electric vehicle, comprising the following steps:
connecting the electric vehicle to the electric vehicle supply equipment with a charging connection comprising a control pilot line, the control pilot line serving for a communication between the electric vehicle supply equipment and the electric vehicle;
measuring an electric signal on the control pilot line by means of a measurement unit;
detecting at least one state of the electric vehicle supply equipment based on the electric signal on the control pilot line by means of a state detection unit, wherein it is distinguished between at least three different possible states, the at least three different possible states comprising:
   - a first state in which the electric vehicle supply equipment is not connected to the electric vehicle via the charging connection;
   - a second state in which the electric vehicle supply equipment is connected to the electric vehicle and does not charge the electric vehicle; and
   - a third state in which the electric vehicle supply equipment is connected to the electric vehicle and charges the electric vehicle;
recording a state time information of the at least one detected state, preferably a state start time, a state end time and/or state duration of the at least one detected state by means of a clock unit; and
storing the state time information of the at least one detected state by means of a memory unit.

Further, the invention relates to a monitoring system for monitoring at least one state of an electric vehicle supply equipment for charging an electric vehicle, comprising:
at least one connection element configured to electrically connect to a control pilot line of the electric vehicle supply equipment or of a charging connection for charging the electric vehicle, the control pilot line serving for a communication between the electric vehicle supply equipment and the electric vehicle;
a measurement unit configured to measure an electric signal on the control pilot line;
a state detection unit configured to detect states of the electric vehicle supply equipment based on the measured electric signal on the control pilot line, wherein the state detection unit is configured to distinguish at least three different possible states of the electric vehicle supply equipment, wherein the at least three different possible states comprise:
   - a first state in which the electric vehicle supply equipment is not connected to the electric vehicle via the charging connection;
   - a second state in which the electric vehicle supply equipment is connected to the electric vehicle and does not charge the electric vehicle; and
   - a third state in which the electric vehicle supply equipment is connected to the electric vehicle and charges the electric vehicle;
a clock unit configured to record state time information of the detected states, preferably a state start time, a state end times and/or state duration of the detected states;
a memory unit configured to store the state time information of the detected states.

The invention further concerns a system of charging an electrical vehicle and a method of charging an electric vehicle.

Electric vehicles, including electric cars, electric motorcycles, electric buses, electric trucks, and even electric boats and electric aircrafts, can be charged at charging stations that are connected to a power grid and/or an energy storage. Charging stations may be operated publicly or privately. To charge their electric vehicle, users park/stop next to a charging station, connect their electric vehicle via a charging connection, and, if required, select a payment method. Some public charging stations offer free electric energy but may charge a parking fee.

Charging stations are commonly referred to as electric vehicle supply equipment (EVSE). In particular in city centers, charging stations often also serve as parking meters since the adjacent space next to the charging station can also be used as a parking spot while the electric vehicle is charging. To encourage electric vehicle owners to only park for as long as necessary, parking fees may be billed in addition to charging fees.

To correctly bill charging and parking fees, it is essential to accurately track the parking and charging times of electric vehicles parked next to a charging station. This is also important from a legal perspective, since charging stations and their time tracking components must comply with legal measurement regulations when the tracked times are used to bill the user of an electric vehicle. These regulations require that external manipulations must be avoided and that the results used for billing users are transparent and reproducible.

In order to comply with legal measurement regulations, the EVSE or at least the system components contributing to time or energy tracking must undergo a testing and certification process. This testing and certification process verifies that the tracking of times and energy is impervious to external manipulations, overrides or any other influences and that the tracked times and energy amounts are accurate.

In the prior art, time tracking often starts when a user interacts with the charging station, e.g., by pressing a button on the display, selecting a payment method, or holding a card to a card reader. However, these trigger signals often do not comply with legal measurement regulations as they depend on user interactions and are not reproducible. Thus, further measures must be taken to achieve measurement regulations compliance, for example by including at least partially additional system components or system processes into the time tracking process, which, however, disadvantageously increases the effort and costs of the certification process.

Once the EVSE or the relevant components are certified, the EVSE or the components used for time tracking, respectively, cannot be adapted anymore or only to a very limited extent. Thus, the larger the number of components contributing to the time tracking is, the more ineligible for adaptions the EVSE becomes. Sometimes, time tracking and energy tracking are performed by a common process or device and hence interrelated with each other, which also aggravates change or adaption of individual components of a once certified device or process. However, depending on the requirements of the operator of the EVSE or the setting where the EVSE shall be applied, further technical adjustments of the EVSE may be required - eventually demanding a costly recertification of the entire equipment.

Methods and systems for charging and billing electrical vehicles are known from US 2020/0118181 A1, DE 10 2020 121 726 A1 and US 2020/0079236 A1.

Accordingly, it is an objective of the present invention to eliminate or at least alleviate at least some of the disadvantages of the prior art. Preferably, it is an objective of the present invention to provide a monitoring system and a method which allow for a reliable, non-manipulable and accurate tracking of parking and/or charging times of an electric vehicle connected to an EVSE. It is also a preferred objective that, once certified, the monitoring system and the method still allow for a simplified adaption or exchange of components of the EVSE.

The objective is solved by a method for monitoring at least one state of an electric vehicle supply equipment (EVSE) for charging an electric vehicle according to claim 1 and a monitoring system for monitoring at least one state of an EVSE for charging an electric vehicle according to claim 11. Claim 9 is directed to a method of charging an electric vehicle. Claim 14 defines a system for charging an electrical vehicle.

The invention provides for a method for monitoring at least one state of an electric vehicle supply equipment for charging an electric vehicle, the method comprising the following steps:
connecting the electric vehicle to the electric vehicle supply equipment with a charging connection comprising a control pilot line, the control pilot line serving for a communication between the electric vehicle supply equipment and the electric vehicle;
measuring an electric signal on the control pilot line by means of a measurement unit;
detecting at least one state of the electric vehicle supply equipment based on the electric signal on the control pilot line by means of a state detection unit, wherein it is distinguished between at least three different possible states, the at least three different possible states comprising:
   a first state in which the electric vehicle supply equipment is not connected to the electric vehicle via the charging connection;
   a second state in which the electric vehicle supply equipment is connected to the electric vehicle and does not charge the electric vehicle; and
   a third state in which the electric vehicle supply equipment is connected to the electric vehicle and charges the electric vehicle;
   recording a state time information of the at least one detected state, preferably a state start time, a state end time and/or state duration of the at least one detected state by means of a clock unit; and
   storing the state time information of the at least one detected state by means of a memory unit,
   wherein a data set with a session identifier is generated by a data set generation unit and stored in the memory unit, said data set comprising the at least one detected state with the respective state time information,
   wherein the state time information comprises a state start time and/or a state end time, wherein the data set is created upon detection of the second state and then filled with at least one detected state and respective state time information, wherein the data set is completed and stored upon detection of an error state,
   wherein a common housing is provided, within which at least the state detection unit, the clock unit and the memory unit are disposed, wherein the common housing comprises fastening elements for fastening at or inside the electric vehicle supply equipment.

In the field of charging electrical vehicles, the control pilot line is used for communication between the EVSE and the electrical vehicle to facilitate charging. By measuring and processing an electrical signal on the control pilot line, a charging and/or parking time of an electrical vehicle can be tracked. The invention is thereby based on the finding that by measuring an electric signal on the control pilot line, a reliable, accurate, and de-facto non-manipulable time information of a state of the EVSE can be determined and recorded. Advantageously, this also allows for compliance with legal measurement requirements. In the prior art, US 2022/0176840 A1 or US 2011/0145141 A1 describe signals on control pilot lines, but do not disclose that these signals are used for deriving state time information. The inventive method may be carried out by a monitoring system, which is described further below. In many countries, such as European countries and the USA, standards for charging and design of EVSEs and equipment used therefor have been established. These standards allow for interoperability between products of different manufacturers. IEC 62196 is an example for a series of international standards that define requirements and tests for plugs, socket-outlets, vehicle connectors and vehicle inlets that are primarily used in European countries and North America. The requirements defined in IEC 62196 are, for instance, implemented in DIN EN 62196 (Germany), in ÖVE/ÖNORM EN 62196 (Austria) and in SN EN 62196 (Switzerland). IEC 61851 provides standards for EVSEs and defines a standard for electrical signals transmitted on the control pilot line. The requirements defined in IEC 61851 are implemented in DIN EN IEC 61851 (Germany), in ÖVE/ÖNORM EN IEC 61851 (Austria) and SN EN IEC 61851 (Switzerland). Standards of electrical signals for control pilot lines are also defined in ISO IEC 15118 and SAE J1772. By means of the control pilot line, states of an EVSE as well as further information for charging, such as maximum charging currents, may be communicated. To this end, the voltage applied on the control pilot line may be changed and/or modulated with a PWM (Pulse Width Modulation). The further information for charging may be contained in the duty cycle of the PWM. The PWM may be modulated by the EVSE. According to the standards, the voltage on the control pilot line may be essentially 12 V in a state in which there is no electrical vehicle connected to the EVSE. Upon connection of an electrical vehicle, the voltage on the control pilot line may drop to essentially 9 V +/- 1 V due to a voltage divider formed with a resistor circuit in the electric vehicle, which transfers the EVSE in a state in which the electrical vehicle is electrically connected, but not charged. In this state, further information for charging may then be transmitted from the EVSE to the electric car via the duty cycle of the PWM. Then, by means of a switching action, the electrical vehicle may cause another voltage drop to 6 V +/- 1 V (or 3 V +/- 1 V, if ventilation is required) to indicate to the EVSE that charging can be started. The EVSE may then switch to a state in which energy is transferred to the electrical vehicle. According to the inventive method, the electric vehicle is connected to the EVSE with a connection comprising the control pilot line. The connection may comprise a cable. The cable may have a length of at least 1 meter (m), at least 2 m or at least 3 m. The cable may comprise detachable electrical connectors at both ends or may be directly coupled to the EVSE or the electrical vehicle on one end, while the other end has an electrical connector for detachable connection. The electrical connector of the charging connection may, for example be, a CCS-connector (CCS = Combined Charging System, see for example the standard IEC 62196). The electrical vehicle may be, for instance, an electric car, an electric motorcycle, an electric bus, an electric truck, an electric boat or an electric aircraft. In general, the electric vehicle is a vehicle which has an electric energy storage for providing electric energy to an electric motor for propulsion of the electric vehicle. The electrical signal on the control pilot line may be measured by a measurement unit which, in one embodiment of the invention, comprises a voltage sensor coupled to the control pilot line. In one embodiment of the invention, the electrical signal of the control pilot line may be measured multiple times per second, for example at least 4 times per second, preferably at least 5 times per second or at least 6 times per second. By measuring the electrical signal of the control pilot line multiple times per second, states of the EVSE may be detected. The electrical signal on the control pilot line may be picked up with at least one connection element, such as an electrical contact element. For further processing, the measured electrical signal may be transduced into a digital signal by means of an analogue-digital-converter. Based on the electrical quantities of the electrical signal, preferably based on the voltage level or voltage amplitude of the signal, respectively, a state of the EVSE may be detected, for instance by a state detection unit. As outlined above, a 12 V voltage level or voltage amplitude may indicate a state of the EVSE in which no electrical vehicle is connected. A 9 V +/- 1 V voltage level or voltage amplitude may indicate that an electrical vehicle is connected to the EVSE, but not charged. A 6 V +/- 1 V or 3 V +/- 1 V voltage level or voltage amplitude may indicate energy transfer. A - 12 V or a o V voltage level may indicate an error. According to the invention, state time information of the at least one detected state is recorded. This may be carried out by a clock unit, which preferably comprises a clock, in particular a real time clock. The clock may have a low time drift to ensure measurement accuracy over long time. A state time information comprises a state start time and/or a state end time. In general, a state start time is a point in time when a particular state is first observed (i.e., a previous observation showed a different or no state), and a state end time is a point in time when a particular state is last observed (i.e., a following observation shows a different or no state). A state end time of a detected state may coincide with a state start time of another detected state. Additionally or alternatively, the state time information may comprise a state duration of a detected state, which can be described as the time difference between a state start time and a state end time.

Thus, in general, only two of state start time, state end time and state duration are required to calculate the third state time information. For instance, if the clock unit records a state start time and a state duration time, a state end time may be calculated from this data. The type of detected state and the respective state time information are stored, preferably in a memory unit. The memory unit may comprise a permanent memory, such as a memory card, preferably SD-card. Once stored in the memory unit, change of data related to state time information and detected states may be prevented by means of a write protection of used memory. For example, the memory may be provided by a write once read many (WORM) data storage device. Alternatively, access to the memory may be restricted to appending operations. Access privileges and/or restrictions to the memory may be implemented in software. In general, within the scope of the claims, said units (that is, the measurement unit, the state detection unit, the clock unit, and the memory unit, at least) and the units to be described below can be functional units that may be implemented by one and the same physical unit or two or more physical units, each performing one or more of the functions. The units and any combination of units may be at least partially implemented in software.

The detecting of the at least one state comprises distinguishing between at least three, preferably at least four, different possible states. The states can be distinguished, for example, by their respective voltage level.

The at least three different possible states comprise:
a first state in which the electric vehicle supply equipment is not connected to the electric vehicle via the charging connection;
a second state in which the electric vehicle supply equipment is connected to the electric vehicle and does not charge the electric vehicle; and
a third state in which the electric vehicle supply equipment is connected to the electric vehicle and charges the electric vehicle.

Each state may correspond to a distinct electric signal on the control pilot line. The electric signal may be voltage level within a particular voltage range, which voltage range distinguishes the state from the other possible states. In the first state, the voltage level applied to the control pilot line may be essentially 12 V. In the second state, the voltage level applied to the control pilot line may be essentially 9 V +/- 1 V. In the second state, a PWM signal may be used to transmit further information for charging, in particular the maximum current for charging, on the control pilot line. The amplitude of the modulated signal may be still 9 V +/- 1 V. In the third state, the voltage level applied to the control pilot line may be 6 V +/-1 V or 3 V +/- 1 V, if ventilation is required. Also in the third state, a PWM signal may be used, wherein the amplitude of this signal is still 6 V +/-1 V or 3 V +/- 1 V. The at least three different possible states may also comprise further states which may be distinguished from each other. In a fourth state, a voltage level of essentially - 12 V may indicate an error. In a fifth state, a voltage level of essentially o V may indicate a deactivated EVSE, which may be considered as error as well.

In a preferred embodiment of the invention, the method further comprises a step of measuring an amount of electric energy transferred by energy transfer lines of the charging connection between the electric vehicle and the electric vehicle supply equipment. To this end, an electricity meter configured to detect an amount of energy transferred via the charging connection may be used. The electricity meter may be a separate unit, which is preferably arranged in a separate housing. The electricity meter may be coupled to the power lines of the charging connection, measuring electric current and electric voltage. The electricity meter may output the amount of energy transferred on the charging connection via an interface to the monitoring system.

The inventive method further comprises a step of generating a data set with a session identifier, preferably a OCMF data set, said data set comprising at least one detected state with the respective state time information, the method further comprising the step of storing the data set. By means of the session identifier, the data set can be unambiguously identified and distinguished from other data sets. The data set may have a predefined format, preferably an OCMF-format (OCMF: Open Charge Metering Format). Specifications of the OCMF-format may be found under https://github.com/SAFE-eV/OCMF-Open-Charge-Metering-Format/blob/2702bae341015a5d9fe4b3872aab5of9aa06d923/docs/Datenformat OC MF v1.0.1-DRAFT.PDF. This document is the Version 1.0, Revision 1.0.1 for the OCMF format specification and defines, among other things, the structure of the OCMF format. After creation of the data set, the data set may be filled with data about one or more detected states and respective state time information. Preferably, the data set is filled with data, in particular updated, at the beginning and at the end of each detected state. In this way, even in case of errors or malfunctions, which lead to a change of the EVSE into the fourth of fifth state, the most recent data is preserved. Further the data set may comprise an identification of the EVSE, an identification of the user, an identification of the monitoring system, payment data and/or an identification of the electric vehicle. In the context of this disclosure, generation of a data set comprises the creation, filling, and completion of a data set. In one exemplary embodiment, a data set is created when an electrical vehicle gets connected with the EVSE and the data set is completed and stored, when the electrical vehicle gets disconnected from the EVSE or when an error occurs. In this way, charging and/or parking times of an electric vehicle at an EVSE can be monitored. The time during which an electric vehicle is connected to the EVSE may be referred to as session in the context of this disclosure. Each data set may be unambiguously assigned to a session and may comprise the states and respective time information related to the session.

Preferably, the data set further comprises the amount of electric energy transferred between the electric vehicle and the electric vehicle supply equipment during the at least one state of the data set. Electric energy may be transferred (only) in the third state. Thus, in one embodiment of the invention, the electric energy transferred may be assigned only to third states in the data set. The energy transferred between the electric vehicle and the EVSE may be derived from an overall energy transfer measured by an electricity meter, i.e., a counter reading, at the beginning and at the end of a session or a state, respectively. Therefore, the data set may comprise the overall energy transfer of the electricity meter at the beginning and at the end of each session, preferably at the beginning and at the end of each third state, from which the transferred amount of electric energy may be derived.

As already mentioned, a data set may be created when an electrical vehicle gets connected to the EVSE and completed when the electrical vehicle gets disconnected from the EVSE or when an error occurs. The data set is created upon detection of the second state and then filled with at least one detected state and respective state time information, wherein the data set is completed and stored upon detection of the first state or an error state. In the error state, the voltage level on the control pilot line may be essentially -12 V (fourth state) or o V (fifth state). In an exemplary embodiment, an electrical vehicle may be connected to the EVSE so that the EVSE is in the second state. Upon detection of the second state, a data set may be created including the detection of the second state and respective state time information. Then the EVSE may change into the third state and charge the electric vehicle. The detection of the third state, the state time information related to the third state and the energy transferred may be included into the data set. Then, when charging is completed, the EVSE may change into the second state again while the electric vehicle remains connected. The detection of the second state and the related state time information may be included into the data set. Then, a user may disconnect the electric vehicle so that the EVSE changes into the first state. The detection of the first state, which equals a termination of the second state, may be included into the data set, whereupon the data set may be completed and stored.

In a preferred embodiment of the invention, the data set comprises a session configuration, preferably comprising payment data, in particular payment tariff data. The session configuration may comprise additional data for tracking and/or billing a user of the EVSE. A session configuration may comprise payment data, such as a payment method or payment tariff data. Payment tariff data may comprise a tariff for parking and/or for charging. The session configuration may be independent from the state time information. The session configuration may be preferably included into the data set upon creation of the data set. The session configuration may not be changed during generation of a data set, i.e., during a session. Thus, only session configuration provided before creation of a data set may be included into the data set.

Preferably, the session configuration included into the data set is the most recent session configuration received before the earliest state start time of the at least one detected state included in the data set. In this way, changes in the session configuration included into the data set may be prevented.

In order to avoid manipulation and to comply with privacy regulations, the data set may be encrypted with a digital key and/or signed with a digital signature, wherein the data set preferably comprises a digital certificate for verifying the digital signature. The encryption may be carried out with a symmetric or asymmetric encryption method. For example, AES-256 encryption may be used. The digital key may be a shared secret key for symmetric encryption or a public key in the case of asymmetric encryption, wherein only someone with access to the private key corresponding to the public key can decrypt the data set (e.g., an operator unit as described below, or generally any higher-level control system or an electronic payment system). The digital signature may guarantee that the data set has been generated by a specific, authorized monitoring system. The digital signature algorithm may be ECDSA, with the secp256r1 curve, and using SHA256 for hashing the message (i.e., the payload - specifically, identifiers, time and energy information - of the data set). The signing key for generating the digital signature is a private key securely stored within the monitoring system, for example on a secure cryptoprocessor integrated with the monitoring system.

For privacy and security reasons, the session identifier may comprise a random number generated upon generation of the data set, wherein the random number is preferably generated by a hardware random number generator. The session identifier may further comprise a time information, such as a local time. The session identifier may also comprise a serial number of the monitoring system used. The session identifier may be hashed by means of a hash function. The session identifier may further comprise a state time information, preferably a state start time, of a detected second state upon which the data set has been created, an identification of the EVSE, and a progressive session number. The progressive session number may be increased for each session.

In one embodiment of the invention, the method may comprise a step of transmitting the state time information of the detected state to an operator unit and/or receiving data from the operator unit via an interface, wherein the operator unit is preferably authenticated using a cryptographic authentication scheme, in particular a shared secret method. In other words, data may be exchanged with the operator unit. On the one hand, the operator unit may receive the state time information which may be used to track and/or bill a user of the EVSE. Thereby, the operator unit may request specific data, such as specific data sets. On the other hand, the operator unit may provide data, for example session configurations used in data sets. In one exemplary embodiment, the operator unit may provide payment data, for instance a payment tariff for parking and charging, respectively. The operator unit may provide this data before a data set is created. After creation of a data set, the operator unit may not change the session configuration of the data set. To avoid manipulation, the operator unit may be authenticated by means of a cryptographic authentication scheme, in particular a shared secret method or by means of a certificate authentication, wherein the monitoring system comprises a certificate store with one or more trusted (root) certificates and accepts data or commands from the operator unit only after the operator unit has been authenticated with one of the trusted certificates or with a certificate chain with a trusted root certificate.

In one embodiment of the invention, the method further comprises a step of receiving the session configuration, preferably comprising payment data, in particular payment tariff data, from the operator unit via the interface.

The invention also relates to a method of charging an electric vehicle, comprising the following steps:
connecting the electric vehicle to an EVSE;
selecting charging and/or payment settings at the EVSE;
charging the electric vehicle with electric energy;
terminating charging of the electric vehicle;
monitoring the states of the EVSE with a method for monitoring at least one state of an EVSE according to the method described above.

The steps of the method of charging can be carried out at least partially overlapping. Monitoring of the states of the EVSE may be conducted in parallel to the other steps. The step of selecting charging and/or payment settings at the EVSE can also be carried out before connecting the electric vehicle to the EVSE. The user may be identified at the EVSE. To this end, payment data, such as a credit card number, or any other identification may be used. In one embodiment of the invention, the user may communicate his/her identification via a near-field communication element, such as RFID-tags or RFID-cards, which may be read out by a near-field communication reader. For identification purposes, the identification of the user may be included into the data set. The charging may be terminated, for example, when a selected amount of energy has been transferred, when the electrical vehicle is disconnected from the EVSE or when an error occurs.

In a preferred embodiment, the method of charging an electric vehicle further comprises the steps of
transmitting the data set to an operator unit;
generating an invoice based on the data set, preferably by the operator unit.

Since the data set comprises at least one detected state and a respective state time information, an invoice may be generated based on the data set. In a preferred embodiment, the data set may also comprise a session configuration, preferably comprising payment data. The session configuration may be used to generate the invoice. However, the invoice may also be generated by using payment data stored in the operator unit. The invoice may be transmitted to the user and/or presented on a display at the EVSE.

The invention also relates to a monitoring system for monitoring at least one state of an EVSE for charging an electric vehicle, comprising:
at least one connection element configured to electrically connect to a control pilot line of the electric vehicle supply equipment or of a charging connection for charging the electric vehicle, the control pilot line serving for a communication between the electric vehicle supply equipment and the electric vehicle;
a measurement unit configured to measure an electric signal on the control pilot line;
a state detection unit configured to detect states of the electric vehicle supply equipment based on the measured electric signal on the control pilot line, wherein the state detection unit is configured to distinguish at least three different possible states of the electric vehicle supply equipment, wherein the at least three different possible states comprise:
   a first state in which the electric vehicle supply equipment is not connected to the electric vehicle via the charging connection;
   a second state in which the electric vehicle supply equipment is connected to the electric vehicle and does not charge the electric vehicle; and
   a third state in which the electric vehicle supply equipment is connected to the electric vehicle and charges the electric vehicle;
   a clock unit configured to record state time information of the detected states, preferably a state start time, a state end times and/or state duration of the detected states;
   a memory unit configured to store the state time information of the detected states;
   a data set generation unit configured to generate data sets with session identifiers, each data set comprising at least one detected state with the respective state time information, the data set generation unit being further configured to store said data sets in the memory unit, wherein the state time information comprises a state start time and/or a state end time,
   wherein the data set generation unit is configured to create the data set upon detection of the second state and to fill the data set then with at least one detected state and respective state time information, wherein the data set generation unit is further configured to complete and store the data set upon detection of an error state,
   a common housing, wherein at least the state detection unit, the clock unit and the memory unit are disposed within the common housing, wherein the common housing comprises fastening elements for fastening at or inside the electric vehicle supply equipment.

The inventive monitoring system is preferably adapted to carry out the above described method for monitoring at least one state of an EVSE for charging an electric vehicle. The advantages of the above-described methods also apply to the inventive monitoring system. Thus, the features described in the context of the methods are transferable to the monitoring system. The monitoring system may contain all relevant parts for monitoring states of an EVSE and comply with measurement regulations, thus still allowing for adaptions of other parts of the EVSE and therefore enhancing flexibility for operators and manufacturers of EVSEs. The monitoring system can comprise or be combined with other devices, such as electricity meters from different manufacturers which may be, in turn, also certified, so that the entire process for tracking and/or billing a user at an EVSE fulfils legal regulations. The inventive monitoring system offers a cost-effective solution for EVSE operators and manufacturers, who can combine different devices and systems within an EVSE while maintaining compliance with regulations. The at least one connection element may comprise at least one electrical contact element. Preferably, the connection element is a plug connector or a socket connector, to which the control pilot line may be connected. By means of the at least one connection element, the monitoring system may be connected electrically parallel to the control pilot line. In one embodiment of the invention, the monitoring system may have an electrical input and an electrical output for looping through the electrical signal control pilot line, the monitoring system being connectable electrically parallel to the control pilot line. The monitoring system can be connected to the control pilot line, for example, at or inside the EVSE. By means of the measurement unit, the electrical signal, in particular a voltage signal, on the control pilot line may be measured. Preferably, the measurement unit measures the voltage of the control pilot line. To this end, the measurement unit may comprise a voltage sensor. However, also a current sensor may be used. The measurement unit may also comprise an analogue-digital-converter to convert the measured signal into a digital signal which can be further processed, for example, in a microprocessor. The measurement unit may carry out multiple measurements of the control pilot line per second. Based on the measured electric signal, the state detection unit may detect a state of the EVSE. The state may be detected based on the voltage level of the measured electrical signal as described above. When a state is detected, time information related to the detected state may be recorded by the clock unit. The clock unit may comprise a clock, e.g., a real time clock. Preferably, the clock has a low drift rate. The clock unit may record a state start time of a detected state. A state start time may be a time when a state starts, i.e., the state is first detected. The clock unit may detect a state end time of a detected state, which may coincide with a state start time of another detected state. A state end time may be a time when a state ends, i.e., is detected the last time and a new state is detected. The clock unit may record a state duration of a detected state, which can be described as the time difference between a state start time and a state end time. As already described above, in general, only two of state start time, state end time and state duration are required to calculate the third time information. The state time information may be related to the detected state. Preferably, state start time, state end time and a state duration of detected states may be recorded and stored in the memory unit. The memory unit may comprise a removable memory card, preferably a SD-card. Detected states and respective state time information may be unambiguously assignable to each other. The measurement unit, the state detection unit, the clock unit and the memory unit may be implemented on a single carrier, such as a circuit board, or in one single integrated circuit. In general, within the scope of the claims, said units and units to be described below can be functional units that may be implemented by one and the same physical unit or two or more physical units, each performing one or more of the functions. Said units may be implemented in software and/or hardware. Units implemented in software may be implemented in a microprocessor or a microcontroller. The partitions of the microcontroller may be encrypted.

In a preferred embodiment of the invention, the state detection unit is configured to distinguish at least three, preferably at least four, different possible states of the electric vehicle supply equipment. The states may be distinguished by their voltage level as described above in the context of the method for monitoring at least one state of an EVSE.

The at least three different possible states comprise:
a first state in which the electric vehicle supply equipment is not connected to the electric vehicle via the charging connection;
a second state in which the electric vehicle supply equipment is connected to the electric vehicle and does not charge the electric vehicle;
and a third state in which the electric vehicle supply equipment is connected to the electric vehicle and charges the electric vehicle. As described in the context of the method for monitoring at least one state of an EVSE, the at least three different states may comprise a fourth and a fifth state.

In order to protect the above mentioned units and to avoid manipulation, the monitoring system further comprises a common housing, wherein at least the state detection unit, the clock unit and the memory unit are disposed within the common housing. The measurement unit may also be at least partially or fully integrated into the common housing. The common housing may comprise openings and/or bushings for connection with a power source and data transfer, for example with an electricity meter, a display and/or an operator unit. Further, the common housing may also comprise an opening for the at least one contact element if the measurement unit is located inside the common housing. In this case, the at least one contact element may be, for example, a wire, which may be guided to the outside of the common housing through the opening. Alternatively, the control pilot line may be looped through the common housing. In this case, the at least on contact element may be connected to the control pilot line inside the housing. The common housing may consist of a plastic material. The common housing comprises fastening elements for fastening at or inside an EVSE.

In a preferred embodiment of the invention, the common housing may be sealed by means of a security seal. The security seal indicates manipulation if the common housing has been opened by non-authorized persons. The security seal may be, for example, a security sticker.

The monitoring system may comprise an electricity meter, preferably a DC electricity meter, configured to measure an amount of electric energy transferred by energy transfer lines of the charging connection. The electricity meter may have an own housing and being located outside the common housing. The electricity meter may be connectable to the power lines of the charging connection. The electricity meter may provide measured energy amounts during certain time durations or counter readings at certain times via an interface. Typically, energy may only be transferred in the third state.

The monitoring system also comprises a data set generation unit configured to generate data sets with session identifiers, preferably OCMF data sets, each data set comprising at least one detected state with the respective state time information, the data set generation unit being further configured to store said data sets in the memory unit. The data set generation unit may be located inside the common housing. The data set generation unit may be implemented in software. The data set is described above in the context of the method for monitoring at least one state of an EVSE.

In one embodiment of the invention, each data set further comprises the amount of electric energy transferred between the electric vehicle and the electric vehicle supply equipment during the at least one state of the data set. The amount of energy transferred during a state, in particular a third state, may be measured by the electricity meter. The data set may comprise energy amounts during states and/or counter readings of the electricity meter at certain times. Preferably, counter readings and/or measured amounts of electric energy are included into the data set upon every change of a state, i.e., at the beginning and at the end of each detected state.

Preferably, each data set comprises a session configuration, preferably comprising payment data, in particular payment tariff data. The session configuration may be provided by the operator unit. This has been described in the context of the method for monitoring at least one state of an EVSE.

In one embodiment of the invention, the monitoring system may comprise an encryption unit configured to encrypt each data set with a digital key and/or sign each data set with a digital signature. The encryption unit may be implemented in software or by a secure cryptoprocessor, for example. The encryption with a digital key and the signing with the digital signature are described above in the context of the method for monitoring at least one state of an EVSE.

To retrieve and further process the gathered data, the monitoring system may comprise an interface for reading out the memory unit. The interface may be implemented in a communication unit inside the common housing. In one embodiment of the invention, data may be exchanged via the http-protocol. Thereby, post-requests and get-requests may be used, wherein authentication hashes may be included into the request header so that both sides can authenticate the communication. Then, data may be exchanged, for example, in form of JSON-strings or JSON-documents.

For interaction with a user, the monitoring system may comprise a display. The display may be configured to display detected states and/or state time information. The displayed data may be encrypted. Further, the display may also display the digital key with which the detected states and the state time information, in particular a data set containing this data, are encrypted. When digital signatures are used, the digital key shown on the display may be a public key that can be used for verifying the digital signature generated by the monitoring system.

The invention further relates to a system for charging an electrical vehicle, comprising:
an EVSE for charging an electric vehicle;
a monitoring system for monitoring at least one state of an EVSE for charging an electric vehicle as described above connected to a control pilot line of EVSE or of a charging connection.

In a preferred embodiment, the system for charging an electrical vehicle may further comprise:
an operator unit, preferably included in the EVSE, configured to transmit data to and/or receive state time information from the monitoring system for monitoring at least one state of an EVSE via an interface. Also, detected state/s related to the state time information may be received by the operator unit. State time information and detected state may be included into data sets, which preferably also comprise a session configuration. The operator unit may be configured to control the functionality of the EVSE, such as charging. The operator unit may be a computer or a microprocessor. The operator unit may be connected to a server, which, for example, may run several operator units of EVSEs. A user may request state time information and detected states, in particular data sets, from the server, preferably by providing the session identifier as well as the digital key or a corresponding digital key. Based on the state time information provided by the monitoring system, the operator unit may generate an invoice for a user that has charged and/or parked his/her electrical vehicle at the EVSE.

In a particularly preferred embodiment of the system for charging an electrical vehicle, the monitoring system comprises a data set generation unit as described above and is configured to transmit the data sets to the operator unit and the operator unit is configured to generate invoices based on the received data sets. The data sets each include at least one detected state, respective state time information and preferably a session configuration, in particular comprising payment data, based on which an invoice may be generated. The payment data be a payment tariff data. The payment tariff data may comprise different tariffs for parking and charging, corresponding to different detected and recorded states.

In the following, exemplary embodiments of the invention are described with reference to drawings, wherein the figures are for purposes of illustrating the present invention and not for purposes of limiting the same. In the drawings, the individual figures show, respectively:
Fig. 1 an EVSE connected to an electrical vehicle;
Fig. 2 voltage levels of states of the EVSE which may be measured on the control pilot line;
Fig. 3 a schematic data set;
Fig. 4 a flow chart of a method for charging an electric vehicle; and
Fig. 5 a schematic of a control pilot network.

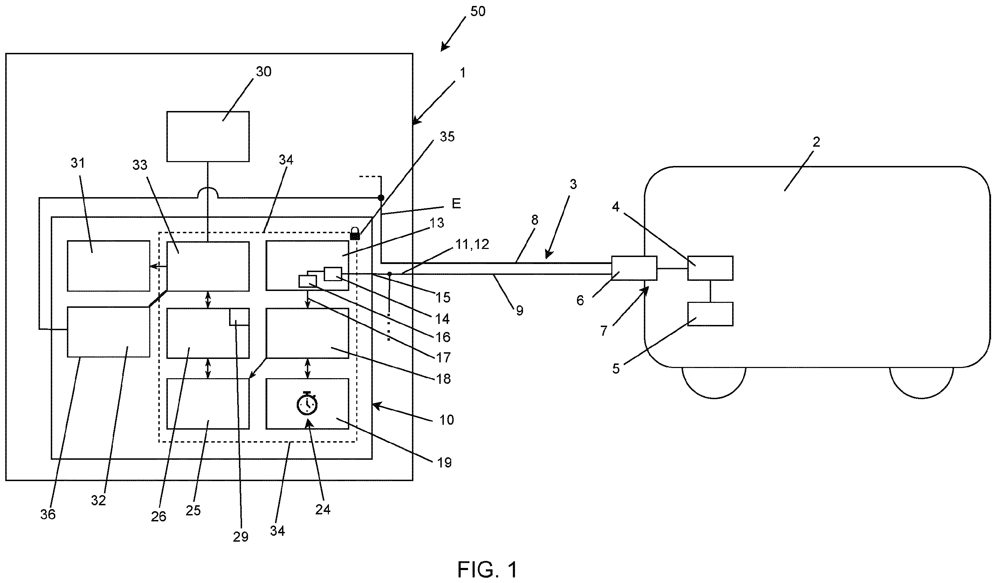

Fig. 1 shows an electric vehicle supply equipment (EVSE) 1 connected to an electrical vehicle 2 via a charging connection 3, which is a charging cable in this example. The electrical vehicle 2 may be, for example, an electric car, an electric motorcycle or an electric truck. The electric vehicle 2 may be any vehicle comprising an energy storage 4 for supplying an electric motor 5 for propulsion of the electric vehicle 2, however.

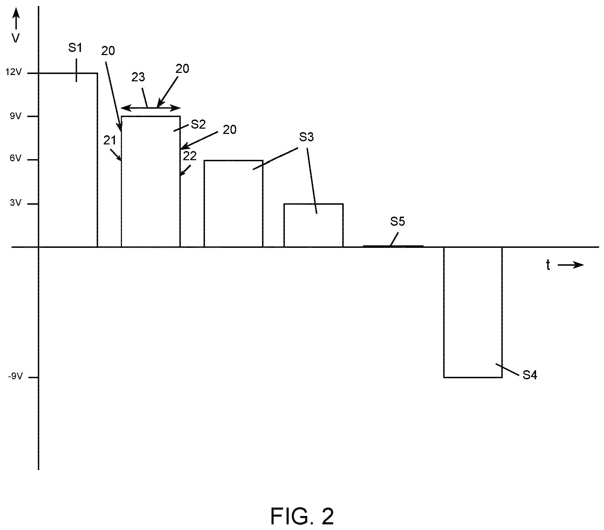

In the embodiment shown, the charging connection 3 is inseparably connected to the EVSE 1 on the one end. On the other end, the charging connection 3 comprises a connector 6 which may be plugged into a corresponding socket 7 at the electrical vehicle 2. The charging connection 3 comprises power lines 8 for transferring electric energy E from the EVSE 1 to the electric vehicle 2. Further, the charging connection 3 comprises a control pilot line 9 serving for a communication between the EVSE 1 and the electric vehicle 2. Via the control pilot line 9, states S1-S5 of the EVSE 1 may be detected (see Fig. 2). The states S1-S5 of the EVSE 1 may be distinguished by the voltage level V on the control pilot line 9 (see also Fig. 2).

In order to bill a user correctly, it is essential to correctly measure an amount of electric energy E and to detect charging and/or parking times of the electric vehicle 2 at the EVSE 1. These measurements shall comply with legal measurement regulations. In the prior art, time tracking often starts when a user interacts with the EVSE 1, e.g., by pressing a button on a display, selecting a payment method or holding a card to a card reader. However, these trigger signals often do not comply with legal measurement regulations as they depend on user interactions and are not reproducible. Thus, further measures must be taken to achieve measurement regulations compliance in the prior art, for example by including at least partially additional system components or system processes into the time tracking process, which, however, disadvantageously increases the effort and costs of the certification process.

According to the invention, a monitoring system 10 is provided for monitoring at least one state S1-S5 of the EVSE 1. The combination of the monitoring system 10 and the EVSE may be referred to as system for charging an electrical vehicle 50. The monitoring system 10 detects states S1-S5 of the EVSE 1 by measuring an electrical signal 11, preferably a voltage signal 12, on the control pilot line 9. To this end, the monitoring system 10 comprises a measurement unit 13, which, in the shown embodiment, comprises a voltage sensor 14. The measurement unit 13 is connected via a connection element 15 to the control pilot line 9. The measurement unit 13 may measure the voltage of the control pilot line 9, for example, six times per second. The measurement unit 13 preferably comprises an analogue-digital-converter 16 which transduces the measured electrical signal 11 into a digital signal 17. The digital signal 17 is then forwarded to a state detection unit 18. The state detection unit 18 is configured to detect a state S1-S5 of the EVSE 1 based on the voltage level V of the electrical signal 11. The states S1-S5 can be distinguished by the voltage level 11 on the control pilot line 9.

The EVSE 1 may be transferred into at the following different states S1-S5, as schematically shown in Fig. 2. In a first state S1, the EVSE 1 is not connected to the electric vehicle 2 via the charging connection 3. The voltage level V may be essentially 12 V. In a second state S2 the EVSE 1 is connected to the electric vehicle 2 and does not charge the electric vehicle 2. The voltage level V may be essentially 9 V. In the second state S2, a PWM modulated signal (not shown) may be used to transmit further information for charging, in particular the maximum current for charging. In a third state S3 the EVSE 1 is connected to the electric vehicle 2 and charges the electric vehicle 2. In the third state S3, the voltage level V may be essentially 6 V or 3 V, if ventilation is required. Also in the third state, a PWM signal may be used, wherein the amplitude of this signal is still 6 V or 3 V. In a fourth state, a voltage level of essentially -12 V may indicate an error. In a fifth state, a voltage level of essentially o V may indicate a deactivated EVSE 1.

Upon detection of a state S1-S5 by the state detection unit 18, a clock unit 19 may record a state time information 20, for example a state start time 21, a state end time 22 and/or a state duration 23 may be detected (see Fig. 2). The detected states S1-S5 and the state time information 20 may be referred to as measurement data which may underly measurement regulations. A state start time 21 may be recorded when a state S1-S5 is first detected by the state detection unit 18. A state end time 22 may be recorded when another state S1-S5 is detected by the state detection unit 18. A state duration 23 may be calculated from the difference between a state start time 21 and a state end time 22. For recording the state time information 20, the clock unit 19 may comprise a clock 24, in particular a real time clock. Detected states S1-S5 and respective state time information 20 may be stored in a memory unit 25.

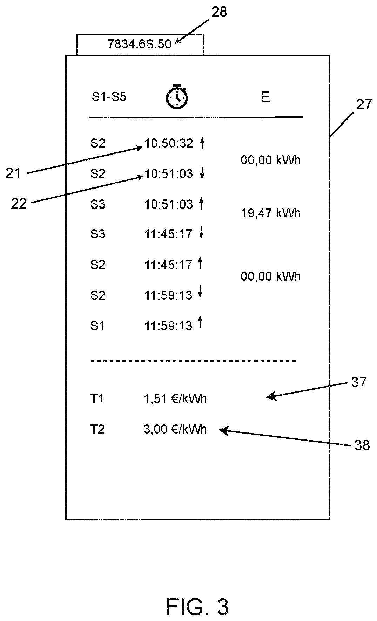

In order to easily assign state time information 20 to detected states S1-S5, the shown monitoring system 10 comprises a data set generation unit 26 configured to generate data sets 27 with session identifiers 28 to identify the data set 27 (Fig. 3). The session identifier 28 of a data set 27 may comprise a random number generated upon generation of the data set 27, wherein the random number is preferably generated by a hardware random number generator 29. The session identifier 28 may also comprise an identification for the monitoring system 10. The data sets 27 each comprise at least one detected state S1-S5 with the respective state time information 20. The data set generation unit 26 is being further configured to store said data sets 27 in the memory unit 25. Preferably, the data sets 27 have an OCMF format.

For communication with an operator unit 30, a display unit 31 and an electricity meter 32, the monitoring system 10 may have a communication unit 33. Said units may be connected to the communication unit 33 for example by ethernet, CAN, RS-485-Modbus. Communication unit 33 may also be referred to as interface. The communication unit 33 may be configured to encrypt and decrypt data.

The measurement unit 13, the state detection unit 18, the clock unit 19, the memory unit 25, the data set generation unit 26 and the communication unit 33 may be at least partially implemented in a microprocessor or a microcontroller. However, said units may also be implemented in at least two different physical units. Said units may also be situated in a common housing 34, which may be sealed with a security seal 35.

In a preferred embodiment of the invention, the measurement unit 13, the state detection unit 18, the data set generation unit 26 and the communication unit 33 may be implemented in one single physical unit, such as a microcontroller or microprocessor. The memory unit 25 and the clock unit 19 may be separate physical units which are connected to the one single physical unit which comprises the measurement unit 13, the state detection unit 18, the data set generation unit 26 and the communication unit 33. All said units are located in the common housing 34. Said units can also be located in different housings, as long as the communication is sealed and not accessible from outside.

The monitoring system 10 may further comprise an electricity meter 32 configured to measure an amount of electric energy E transferred on the power lines 8. The electricity meter 32 may have a housing 36 separated from common housing 34. The electricity meter 32 may provide the measured amount of electric energy E to the communication unit 33, which may forward the measured amount of electric energy E to the data set generation unit 26 which may include the measured amount of energy E transferred on the power lines 8 during a state S1-S5 into the generated data sets 27. Typically, electric energy is only transferred in the third state S3. A data set 27 may comprise detected states S1-S5, respective state time information 16 and measured amount of electric energy E during the detected states S1-S5 (see Fig. 3). Electricity meter 32 may communicate measured amounts of energy, for instance, via a RS-485 interface.

Operator unit 30 may receive data sets 27 from the monitoring system 10. On the other hand, operating unit 30 may provide non-measurement data, such as session configuration 37, to the monitoring system 10. A session configuration 37 may comprise payment data, in particular payment tariff data 38. In one exemplary embodiment, payment tariff data 38 may comprise a tariff data for charging and a tariff data for parking. Session configuration 37 may be included into the data sets 27. However, only the most recent session configuration 37 received before the earliest state start time 21 of the at least one detected state S1-S5 may be included into the data set 27.

In the shown embodiment, the monitoring system 7 may further comprise a display unit 31 which may display the data set 27 and a digital key for encryption of the data set 27.

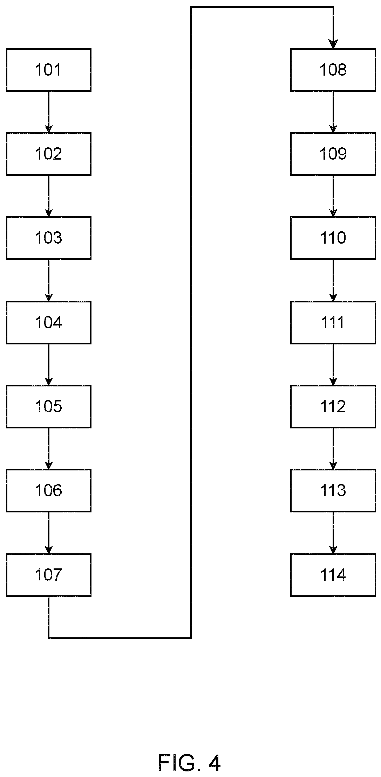

Fig. 4 depicts a method for charging an electric vehicle 2. In step 101, an EVSE 1 is in a first state S1. In step 102, a user selects a payment method, for example provides credit card details to the operator unit 30. In step 103, the user connects the electric vehicle 2 to the EVSE 1 via the charging connection 3, causing the EVSE 1 to change to the second state S2. In step 104, the state detection unit 18 detects the second state S2. Clock unit 19 records state start time 21 of the second state S2. Upon detection of the second state S2, a data set 27 with a unique session identifier 28 is created and, in the following, filled with detected states S1-S5 and state time information 20. Upon creation of the data set 27, the data set 27 is also filled with a session configuration 37 transmitted from the operator unit 30 before creation of the data set 27. In step 105, the electric vehicle 2 is ready to be charged and changes the state of the EVSE 1 into the third state S3. State S3 is detected by the state detection unit 18. Clock unit 19 records the state end time 22 of the second state S2 and the state start time 21 of the third state S3. The new state time information 20 and the detection of the third state S3 is included into the data set 27. In step 106, the EVSE 1 starts to charge the electric vehicle 2. The amount of electric energy E is measured by the electricity meter 32 and included into the data set 27. In step 107, the electric vehicle 2 is fully charged so that energy transfer is stopped and the EVSE 1 is brought into the second state S2 again. State S2 is detected by the state detection unit 18. Clock unit 19 records the state end time 22 of the third state S3 and the state start time 21 of the second state S2. The new state time information 20 and the detection of the third state S3 is included into the data set 27. In step 108, the electric vehicle 2 remains connected to the EVSE 1 but is not charged. In other words, electric vehicle 2 remains parked at the EVSE 1 without charging. In step 109, the user disconnects the electric vehicle 2 from the EVSE 1 so that the EVSE 1 changes into state S1. State S1 is detected by state detection unit 18. Clock unit 19 records the state end time 22 of the second state S2 and the state start time 21 of the first state S1. The new state time information 20 and the detection of the first state S1 is included into the data set 27. Upon detection of the first state S1, the data set 27 is completed after including the respective state time information 20 (step 110). In step 111, data set 27 is encrypted with a digital key, which may be a public key. In step 112 data set 27 and the digital key are displayed at the display unit 31 is transmitted to the operator unit 30. In step 113, operator unit 30 decrypts data set 27 with the same digital key or a corresponding (private) digital key. In step 114, operator unit generates an invoice based on the data set 27. Thereby, different tariffs for parking and charging may be used. These tariffs may be included in the session configuration 37 of the data set 27.

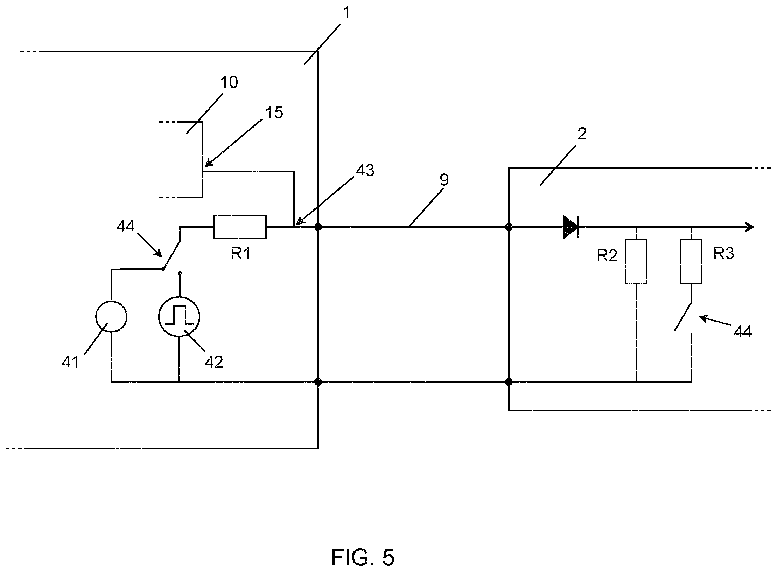

Fig. 5 schematically shows a control pilot network 39. In the EVSE 1, a switch 40 allows for selection between a 12 V constant voltage source 41 and a 12 V oscillator 42. In the first state, constant voltage source 41 is selected. When the electric vehicle 2 is connected, the voltage at measurement point 43, which the at least one contact element 15 of the monitoring device 10 is electrically connected to, is pulled to essentially 9 V (second state) due to a voltage divider comprising the resistors R₁ and R₂. After connection of the electric vehicle 2, switch 40 may switch to the oscillator 42 to generate a PWM modulated signal on the control pilot line 9. The duty cycle of the PWM contains information about the maximum current which the EVSE 1 can provide. When the electrical vehicle 2 is ready for charging, the electrical vehicle 2 may close switch 44 at resistor R₃ to change the voltage divider, which causes the voltage at the measurement point 43 to drop to essentially 6 V or 3 V (third state), depending on the type of electrical vehicle 2. In case of an error, the voltage source 41 and/or the oscillator 42 may provide -12 V. If the EVSE is deactivated, voltage at the measurement point 43 drops to essentially o V.

## Claims

1. Method for monitoring at least one state (S1-S5) of an electric vehicle supply equipment (1) for charging an electric vehicle (2), comprising the following steps:
connecting the electric vehicle (2) to the electric vehicle supply equipment (1) with a charging connection (3) comprising a control pilot line (9), the control pilot line (9) serving for a communication between the electric vehicle supply equipment (1) and the electric vehicle (2);
measuring an electric signal (11) on the control pilot line (9) by means of a measurement unit (13);
detecting at least one state (S1-S5) of the electric vehicle supply equipment (1) based on the electric signal (11) on the control pilot line (9) by means of a state detection unit (18), wherein it is distinguished between at least three different possible states (S1-S5), the at least three different possible states (S1-S5) comprising:
- a first state (S1) in which the electric vehicle supply equipment (1) is not connected to the electric vehicle (2) via the charging connection (3);
- a second state (S2) in which the electric vehicle supply equipment (1) is connected to the electric vehicle (2) and does not charge the electric vehicle (2); and
- a third state (S3) in which the electric vehicle supply equipment (1) is connected to the electric vehicle (2) and charges the electric vehicle (2);
recording a state time information (20) of the at least one detected state (S1-S5), preferably a state start time (21), a state end time (22) and/or state duration (23) of the at least one detected state (S1-S5) by means of a clock unit (19); and
storing the state time information of the at least one detected state (S1-S5) by means of a memory unit (25),
**characterized in that**
a data set (27) with a session identifier (28) is generated by a data set generation unit (26) and stored in the memory unit (25), said data set (27) comprising the at least one detected state (S1-S5) with the respective state time information (20),
wherein the state time information (20) comprises a state start time (21) and/or a state end time (22), wherein the data set (27) is created upon detection of the second state (S2) and then filled with at least one detected state (S1-S5) and respective state time information (20), wherein the data set (27) is completed and stored upon detection of an error state (S4, S5),
wherein a common housing (34) is provided, within which at least the state detection unit (18), the clock unit (19) and the memory unit (25) are disposed, wherein the common housing (34) comprises fastening elements for fastening at or inside the electric vehicle supply equipment (1).

2. Method according to claim 1, wherein the detecting of the at least one state (S1-S5) comprises distinguishing between at least four different possible states (S1-S5).

3. Method according to any one of claims 1 to 2, further comprising a step of measuring an amount of electric energy transferred by energy transfer lines (8) of the charging connection (3) between the electric vehicle (2) and the electric vehicle supply equipment (1).

4. Method according to claim 3, wherein the data set (27) further comprises the amount of electric energy (E) transferred between the electric vehicle (2) and the electric vehicle supply equipment (1) during the at least one state (S1-S5) of the data set (27).

5. Method according to any one of claims 1 to 4, wherein the data set (27) comprises a session configuration (37), preferably comprising payment data, in particular payment tariff data (38).

6. Method according to claim 5, wherein the session configuration (37) included into the data set (27) is the most recent session configuration (37) received before the earliest state start time (21) of the at least one detected state (S1-S5) included in the data set (27).

7. Method according to any one of claims 1 to 6, wherein the data set is encrypted with a digital key and/or signed with a digital signature, wherein the data set preferably comprises a digital certificate for verifying the digital signature.

8. Method according to any one of claims 1 to 7, wherein the session identifier (28) comprises a random number generated upon generation of the data set (27), wherein the random number is preferably generated by a hardware random number generator (29).

9. Method of charging an electric vehicle (2), comprising the following steps:
connecting the electric vehicle (2) to an electric vehicle supply equipment (1);
selecting charging and/or payment settings at the electric vehicle supply equipment (1);
charging the electric vehicle (2) with electric energy;
terminating charging of the electric vehicle (2);
monitoring the states (S1-S5) of the electric vehicle supply equipment (1) with a method for monitoring at least one state (S1-S5) of an electric vehicle supply equipment (1) according to any one of claims 1-8.

10. Method according to claim 9, wherein the method for monitoring at least one state (S1-S5) of an electric vehicle supply equipment (1) conforms to one of claims 1-7, and the method of charging an electric vehicle further comprises the steps of
transmitting the data set (27) to an operator unit (30);
generating an invoice based on the data set (27), preferably by the operator unit (30).

11. Monitoring system (10) for monitoring at least one state (S1-S5) of an electric vehicle supply equipment (1) for charging an electric vehicle (2), comprising:
at least one connection element (15) configured to electrically connect to a control pilot line (9) of the electric vehicle supply equipment (1) or of a charging connection (3) for charging the electric vehicle (2), the control pilot line (9) serving for a communication between the electric vehicle supply equipment (1) and the electric vehicle (2);
a measurement unit (13) configured to measure an electric signal (11) on the control pilot line (9);
a state detection unit (18) configured to detect states (S1-S5) of the electric vehicle supply equipment (1) based on the measured electric signal (11) on the control pilot line (9), wherein the state detection unit (18) is configured to distinguish at least three different possible states (S1-S5) of the electric vehicle supply equipment (1), wherein the at least three different possible states (S1-S5) comprise:
- a first state (S1) in which the electric vehicle supply equipment (1) is not connected to the electric vehicle (2) via the charging connection (3);
- a second state (S2) in which the electric vehicle supply equipment (1) is connected to the electric vehicle (2) and does not charge the electric vehicle (2); and
- a third state (S3) in which the electric vehicle supply equipment (1) is connected to the electric vehicle (2) and charges the electric vehicle (2);
a clock unit (19) configured to record state time information (20) of the detected states (S1-S5), preferably a state start time (21), a state end times (22) and/or state duration (23) of the detected states (S1-S5);
a memory unit (25) configured to store the state time information (20) of the detected states (S1-S5)
**characterized by**
a data set generation unit (26) configured to generate data sets (27) with session identifiers (28), each data set (27) comprising at least one detected state (S1-S5) with the respective state time information (20), the data set generation unit (26) being further configured to store said data sets (27) in the memory unit (25), wherein the state time information (20) comprises a state start time (21) and/or a state end time (22),
wherein the data set generation unit (26) is configured to create the data set (27) upon detection of the second state (S2) and to fill the data set (27) then with at least one detected state (S1-S5) and respective state time information (20), wherein the data set generation unit (26) is further configured to complete and store the data set (27) upon detection of an error state (S4, S5),
a common housing (34), wherein at least the state detection unit (18), the clock unit (19) and the memory unit (25) are disposed within the common housing (34), wherein the common housing (34) comprises fastening elements for fastening at or inside the electric vehicle supply equipment (1).

12. Monitoring system (10) according to claim 11, wherein the common housing is sealed by means of a security seal (35).

13. Monitoring system (10) according to any one of claims 11 to 12, further comprising an electricity meter (32), preferably a DC electricity meter, configured to measure an amount of electric energy (E) transferred by energy transfer lines (8) of the charging connection (3), preferably wherein each data set (27) further comprise the amount of electric energy (E) transferred between the electric vehicle (2) and the electric vehicle supply equipment (1) during the at least one state (S1-S5) of the data set (27).

14. System (50) for charging an electrical vehicle (2), comprising:
an electric vehicle supply equipment (1) for charging an electric vehicle (2);
a monitoring system (10) for monitoring at least one state (S1-S5) of an electric vehicle supply equipment (1) for charging an electric vehicle (2) according to one of claims 11 to 13 connected to a control pilot line (9) of the electric vehicle supply equipment (1) or of a charging connection (3).

15. System (50) according to claim 14, the system further comprising:
an operator unit (30), preferably included in the electric vehicle supply equipment (1), configured to transmit data to and/or receive state time information from the monitoring system (10) for monitoring at least one state of an electric vehicle supply equipment (1) via an interface (33).

## Patentansprüche

1. Verfahren zum Überwachen mindestens eines Zustands (S1-S5) einer Elektrofahrzeug-Versorgungseinrichtung (1) zum Laden eines Elektrofahrzeugs (2), umfassend die folgenden Schritte:
Verbinden des Elektrofahrzeugs (2) mit der Elektrofahrzeug-Versorgungseinrichtung (1) mit einer Ladeverbindung (3), die eine Steuerpilotleitung (9) umfasst, wobei die Steuerpilotleitung (9) für eine Kommunikation zwischen der Elektrofahrzeug-Versorgungseinrichtung (1) und dem Elektrofahrzeug (2) dient;
Messen eines elektrischen Signals (11) auf der Steuerpilotleitung (9) mittels einer Messeinheit (13);
Erfassen mindestens eines Zustands (S1-S5) der Elektrofahrzeug-Versorgungseinrichtung (1) basierend auf dem elektrischen Signal (11) auf der Steuerpilotleitung (9) mittels einer Zustandserfassungseinheit (18), wobei zwischen mindestens drei verschiedenen möglichen Zuständen (S1-S5) unterschieden wird, wobei die mindestens drei verschiedenen möglichen Zustände (S1-S5) umfassen:
- einen ersten Zustand (S1), in dem die Elektrofahrzeug-Versorgungseinrichtung (1) nicht über die Ladeverbindung (3) mit dem Elektrofahrzeug (2) verbunden ist;
- einen zweiten Zustand (S2), in dem die Elektrofahrzeug-Versorgungseinrichtung (1) mit dem Elektrofahrzeug (2) verbunden ist und das Elektrofahrzeug (2) nicht lädt; und
- einen dritten Zustand (S3), in dem die Elektrofahrzeug-Versorgungseinrichtung (1) mit dem Elektrofahrzeug (2) verbunden ist und das Elektrofahrzeug (2) lädt;
Aufzeichnen einer Zustandszeitinformation (20) des mindestens einen erfassten Zustands (S1-S5), vorzugsweise einer Zustandsstartzeit (21), einer Zustandsendzeit (22) und/oder einer Zustandsdauer (23) des mindestens einen erfassten Zustands (S1-S5) mittels einer Zeitgebereinheit (19); und
Speichern der Zustandszeitinformation des mindestens einen erfassten Zustands (S1-S5) mittels einer Speichereinheit (25), **dadurch gekennzeichnet, dass**
ein Datensatz (27) mit einer Sitzungskennung (28) durch eine Datensatz-Erzeugungseinheit (26) erzeugt und in der Speichereinheit (25) gespeichert wird, wobei der besagte Datensatz (27) den mindestens einen erfassten Zustand (S1-S5) mit der jeweiligen Zustandszeitinformation (20) umfasst,
wobei die Zustandszeitinformation (20) eine Zustandsstartzeit (21) und/oder eine Zustandsendzeit (22) umfasst, wobei der Datensatz (27) bei Erfassung des zweiten Zustands (S2) erstellt wird und dann mit mindestens einem erfassten Zustand (S1-S5) und der jeweiligen Zustandszeitinformation (20) gefüllt wird, wobei der Datensatz (27) bei Erfassung eines Fehlerzustands (S4, S5) vervollständigt und gespeichert wird,
wobei ein gemeinsames Gehäuse (34) bereitgestellt ist, innerhalb dessen mindestens die Zustandserfassungseinheit (18), die Zeitgebereinheit (19) und die Speichereinheit (25) angeordnet sind, wobei das gemeinsame Gehäuse (34) Befestigungselemente zum Befestigen an oder innerhalb der Elektrofahrzeug-Versorgungseinrichtung (1) umfasst.

2. Verfahren nach Anspruch 1, wobei das Erfassen des mindestens einen Zustands (S1-S5) das Unterscheiden zwischen mindestens vier verschiedenen möglichen Zuständen (S1-S5) umfasst.

3. Verfahren nach einem der Ansprüche 1 bis 2, ferner umfassend einen Schritt des Messens einer Menge an elektrischer Energie, die durch Energieübertragungsleitungen (8) der Ladeverbindung (3) zwischen dem Elektrofahrzeug (2) und der Elektrofahrzeug-Versorgungseinrichtung (1) übertragen wird.

4. Verfahren nach Anspruch 3, wobei der Datensatz (27) ferner die Menge an elektrischer Energie (E) umfasst, die zwischen dem Elektrofahrzeug (2) und der Elektrofahrzeug-Versorgungseinrichtung (1) während des mindestens einen Zustands (S1-S5) des Datensatzes (27) übertragen wird.

5. Verfahren nach einem der Ansprüche 1 bis 4, wobei der Datensatz (27) eine Sitzungskonfiguration (37) umfasst, vorzugsweise umfassend Zahlungsdaten, insbesondere Zahlungstarifdaten (38).

6. Verfahren nach Anspruch 5, wobei die in den Datensatz (27) eingefügte Sitzungskonfiguration (37) die aktuellste Sitzungskonfiguration (37) ist, die vor der frühesten Zustandsstartzeit (21) des mindestens einen in dem Datensatz (27) enthaltenen erfassten Zustands (S1-S5) empfangen wurde.

7. Verfahren nach einem der Ansprüche 1 bis 6, wobei der Datensatz mit einem digitalen Schlüssel verschlüsselt und/oder mit einer digitalen Signatur signiert ist, wobei der Datensatz vorzugsweise ein digitales Zertifikat zum Verifizieren der digitalen Signatur umfasst.

8. Verfahren nach einem der Ansprüche 1 bis 7, wobei die Sitzungskennung (28) eine Zufallszahl umfasst, die bei der Erzeugung des Datensatzes (27) erzeugt wird, wobei die Zufallszahl vorzugsweise durch einen Hardware-Zufallszahlengenerator (29) erzeugt wird.

9. Verfahren zum Laden eines Elektrofahrzeugs (2), umfassend die folgenden Schritte:
Verbinden des Elektrofahrzeugs (2) mit einer Elektrofahrzeug-Versorgungseinrichtung (1);
Auswählen von Lade- und/oder Zahlungseinstellungen an der Elektrofahrzeug-Versorgungseinrichtung (1);
Laden des Elektrofahrzeugs (2) mit elektrischer Energie;
Beenden des Ladens des Elektrofahrzeugs (2);
Überwachen der Zustände (S1-S5) der Elektrofahrzeug-Versorgungseinrichtung (1) mit einem Verfahren zum Überwachen mindestens eines Zustands (S1-S5) einer Elektrofahrzeug-Versorgungseinrichtung (1) nach einem der Ansprüche 1-8.

10. Verfahren nach Anspruch 9, wobei das Verfahren zum Überwachen mindestens eines Zustands (S1-S5) einer Elektrofahrzeug-Versorgungseinrichtung (1) einem der Ansprüche 1-7 entspricht, und das Verfahren zum Laden eines Elektrofahrzeugs ferner die Schritte umfasst:
Übertragen des Datensatzes (27) an eine Betreibereinheit (30);
Erzeugen einer Rechnung basierend auf dem Datensatz (27), vorzugsweise durch die Betreibereinheit (30).

11. Überwachungssystem (10) zum Überwachen mindestens eines Zustands (S1-S5) einer Elektrofahrzeug-Versorgungseinrichtung (1) zum Laden eines Elektrofahrzeugs (2), umfassend:
mindestens ein Verbindungselement (15), das ausgebildet ist, um sich elektrisch mit einer Steuerpilotleitung (9) der Elektrofahrzeug-Versorgungseinrichtung (1) oder einer Ladeverbindung (3) zum Laden des Elektrofahrzeugs (2) zu verbinden, wobei die Steuerpilotleitung (9) für eine Kommunikation zwischen der Elektrofahrzeug-Versorgungseinrichtung (1) und dem Elektrofahrzeug (2) dient;
eine Messeinheit (13), die ausgebildet ist, um ein elektrisches Signal (11) auf der Steuerpilotleitung (9) zu messen;
eine Zustandserfassungseinheit (18), die ausgebildet ist, um Zustände (S1-S5) der Elektrofahrzeug-Versorgungseinrichtung (1) basierend auf dem gemessenen elektrischen Signal (11) auf der Steuerpilotleitung (9) zu erfassen, wobei die Zustandserfassungseinheit (18) ausgebildet ist, um mindestens drei verschiedene mögliche Zustände (S1-S5) der Elektrofahrzeug-Versorgungseinrichtung (1) zu unterscheiden, wobei die mindestens drei verschiedenen möglichen Zustände (S1-S5) umfassen:
- einen ersten Zustand (S1), in dem die Elektrofahrzeug-Versorgungseinrichtung (1) nicht über die Ladeverbindung (3) mit dem Elektrofahrzeug (2) verbunden ist;
- einen zweiten Zustand (S2), in dem die Elektrofahrzeug-Versorgungseinrichtung (1) mit dem Elektrofahrzeug (2) verbunden ist und das Elektrofahrzeug (2) nicht lädt; und
- einen dritten Zustand (S3), in dem die Elektrofahrzeug-Versorgungseinrichtung (1) mit dem Elektrofahrzeug (2) verbunden ist und das Elektrofahrzeug (2) lädt;
eine Zeitgebereinheit (19), die ausgebildet ist, um eine Zustandszeitinformation (20) der erfassten Zustände (S1-S5) aufzuzeichnen, vorzugsweise eine Zustandsstartzeit (21), eine Zustandsendzeit (22) und/oder eine Zustandsdauer (23) der erfassten Zustände (S1-S5);
eine Speichereinheit (25), die ausgebildet ist, um die Zustandszeitinformation (20) der erfassten Zustände (S1-S5) zu speichern,
**gekennzeichnet durch**
eine Datensatz-Erzeugungseinheit (26), die ausgebildet ist, um Datensätze (27) mit Sitzungskennungen (28) zu erzeugen, wobei jeder Datensatz (27) mindestens einen erfassten Zustand (S1-S5) mit der jeweiligen Zustandszeitinformation (20) umfasst, wobei die Datensatz-Erzeugungseinheit (26) ferner ausgebildet ist, um die besagten Datensätze (27) in der Speichereinheit (25) zu speichern, wobei die Zustandszeitinformation (20) eine Zustandsstartzeit (21) und/oder eine Zustandsendzeit (22) umfasst,
wobei die Datensatz-Erzeugungseinheit (26) ausgebildet ist, um den Datensatz (27) bei Erfassung des zweiten Zustands (S2) zu erstellen und den Datensatz (27) dann mit mindestens einem erfassten Zustand (S1-S5) und der jeweiligen Zustandszeitinformation (20) zu füllen, wobei die Datensatz-Erzeugungseinheit (26) ferner ausgebildet ist, um den Datensatz (27) bei Erfassung eines Fehlerzustands (S4, S5) zu vervollständigen und zu speichern,
ein gemeinsames Gehäuse (34), wobei mindestens die Zustandserfassungseinheit (18), die Zeitgebereinheit (19) und die Speichereinheit (25) innerhalb des gemeinsamen Gehäuses (34) angeordnet sind, wobei das gemeinsame Gehäuse (34) Befestigungselemente zum Befestigen an oder innerhalb der Elektrofahrzeug-Versorgungseinrichtung (1) umfasst.

12. Überwachungssystem (10) nach Anspruch 11, wobei das gemeinsame Gehäuse mittels eines Sicherheitssiegels (35) versiegelt ist.

13. Überwachungssystem (10) nach einem der Ansprüche 11 bis 12, ferner umfassend einen Stromzähler (32), vorzugsweise einen Gleichstromzähler, der ausgebildet ist, um eine Menge an elektrischer Energie (E) zu messen, die durch Energieübertragungsleitungen (8) der Ladeverbindung (3) übertragen wird, vorzugsweise wobei jeder Datensatz (27) ferner die Menge an elektrischer Energie (E) umfasst, die zwischen dem Elektrofahrzeug (2) und der Elektrofahrzeug-Versorgungseinrichtung (1) während des mindestens einen Zustands (S1-S5) des Datensatzes (27) übertragen wird.

14. System (50) zum Laden eines Elektrofahrzeugs (2), umfassend:
eine Elektrofahrzeug-Versorgungseinrichtung (1) zum Laden eines Elektrofahrzeugs (2);
ein Überwachungssystem (10) zum Überwachen mindestens eines Zustands (S1-S5) einer Elektrofahrzeug-Versorgungseinrichtung (1) zum Laden eines Elektrofahrzeugs (2) nach einem der Ansprüche 11 bis 13, das mit einer Steuerpilotleitung (9) der Elektrofahrzeug-Versorgungseinrichtung (1) oder einer Ladeverbindung (3) verbunden ist.

15. System (50) nach Anspruch 14, wobei das System ferner umfasst:
eine Betreibereinheit (30), vorzugsweise enthalten in der Elektrofahrzeug-Versorgungseinrichtung (1), die ausgebildet ist, um Daten an das Überwachungssystem (10) zum Überwachen mindestens eines Zustands einer Elektrofahrzeug-Versorgungseinrichtung (1) zu übertragen und/oder Zustandszeitinformation von dem Überwachungssystem (10) zum Überwachen mindestens eines Zustands einer Elektrofahrzeug-Versorgungseinrichtung (1) über eine Schnittstelle (33) zu empfangen.

## Revendications

1. Procédé de surveillance d'au moins un état (S1-S5) d'un équipement d'alimentation pour véhicule électrique (1) destiné à charger un véhicule électrique (2), comprenant les étapes suivantes :
connexion du véhicule électrique (2) à l'équipement d'alimentation pour véhicule électrique (1) avec une connexion de charge (3) qui comprend une ligne pilote de commande (9), dans lequel la ligne pilote de commande (9) sert à une communication entre l'équipement d'alimentation pour véhicule électrique (1) et le véhicule électrique (2) ;
mesure d'un signal électrique (11) sur la ligne pilote de commande (9) au moyen d'une unité de mesure (13) ;
détection d'au moins un état (S1-S5) de l'équipement d'alimentation pour véhicule électrique (1) sur la base du signal électrique (11) sur la ligne pilote de commande (9) au moyen d'une unité de détection d'état (18), dans lequel une distinction est faite entre au moins trois états (S1-S5) possibles différents, dans lequel lesdits au moins trois états (S1-S5) possibles différents comprennent :
- un premier état (S1) dans lequel l'équipement d'alimentation pour véhicule électrique (1) n'est pas connecté au véhicule électrique (2) via la connexion de charge (3) ;
- un deuxième état (S2) dans lequel l'équipement d'alimentation pour véhicule électrique (1) est connecté au véhicule électrique (2) et ne charge pas le véhicule électrique (2) ; et
- un troisième état (S3) dans lequel l'équipement d'alimentation pour véhicule électrique (1) est connecté au véhicule électrique (2) et charge le véhicule électrique (2) ;
enregistrement d'une information temporelle d'état (20) de l'au moins un état (S1-S5) détecté, de préférence un temps de début d'état (21), un temps de fin d'état (22) et/ou une durée d'état (23) de l'au moins un état (S1-S5) détecté au moyen d'une unité de minuterie (19) ; et
stockage de l'information temporelle d'état de l'au moins un état (S1-S5) détecté au moyen d'une unité de mémoire (25),
**caractérisé en ce que**
un ensemble de données (27) avec un identifiant de session (28) est généré par une unité de génération d'ensemble de données (26) et est stocké dans l'unité de mémoire (25), dans lequel ledit ensemble de données (27) comprend l'au moins un état (S1-S5) détecté avec l'information temporelle d'état (20) respective,
dans lequel l'information temporelle d'état (20) comprend un temps de début d'état (21) et/ou un temps de fin d'état (22), dans lequel l'ensemble de données (27) est créé lors de la détection du deuxième état (S2) et est ensuite rempli avec au moins un état (S1-S5) détecté et l'information temporelle d'état (20) respective, dans lequel l'ensemble de données (27) est complété et stocké lors de la détection d'un état d'erreur (S4, S5),
dans lequel un boîtier commun (34) est fourni, à l'intérieur duquel sont disposées au moins l'unité de détection d'état (18), l'unité de minuterie (19) et l'unité de mémoire (25), dans lequel le boîtier commun (34) comprend des éléments de fixation pour la fixation sur ou à l'intérieur de l'équipement d'alimentation pour véhicule électrique (1).

2. Procédé selon la revendication 1, dans lequel la détection de l'au moins un état (S1-S5) comprend la distinction entre au moins quatre états (S1-S5) possibles différents.

3. Procédé selon l'une des revendications 1 à 2, comprenant en outre une étape de mesure d'une quantité d'énergie électrique qui est transmise par des lignes de transmission d'énergie (8) de la connexion de charge (3) entre le véhicule électrique (2) et l'équipement d'alimentation pour véhicule électrique (1).

4. Procédé selon la revendication 3, dans lequel l'ensemble de données (27) comprend en outre la quantité d'énergie électrique (E) qui est transmise entre le véhicule électrique (2) et l'équipement d'alimentation pour véhicule électrique (1) pendant l'au moins un état (S1-S5) de l'ensemble de données (27).

5. Procédé selon l'une des revendications 1 à 4, dans lequel l'ensemble de données (27) comprend une configuration de session (37), comprenant de préférence des données de paiement, en particulier des données de tarif de paiement (38).

6. Procédé selon la revendication 5, dans lequel la configuration de session (37) insérée dans l'ensemble de données (27) est la configuration de session (37) la plus récente qui a été reçue avant le temps de début d'état (21) le plus précoce de l'au moins un état (S1-S5) détecté contenu dans l'ensemble de données (27).

7. Procédé selon l'une des revendications 1 à 6, dans lequel l'ensemble de données est chiffré avec une clé numérique et/ou signé avec une signature numérique, dans lequel l'ensemble de données comprend de préférence un certificat numérique pour vérifier la signature numérique.

8. Procédé selon l'une des revendications 1 à 7, dans lequel l'identifiant de session (28) comprend un nombre aléatoire qui est généré lors de la génération de l'ensemble de données (27), dans lequel le nombre aléatoire est généré de préférence par un générateur matériel de nombres aléatoires (29).

9. Procédé de charge d'un véhicule électrique (2), comprenant les étapes suivantes :
connexion du véhicule électrique (2) à un équipement d'alimentation pour véhicule électrique (1) ;
sélection de paramètres de charge et/ou de paiement au niveau de l'équipement d'alimentation pour véhicule électrique (1) ;
charge du véhicule électrique (2) avec de l'énergie électrique ;
fin de la charge du véhicule électrique (2) ;
surveillance des états (S1-S5) de l'équipement d'alimentation pour véhicule électrique (1) avec un procédé de surveillance d'au moins un état (S1-S5) d'un équipement d'alimentation pour véhicule électrique (1) selon l'une des revendications 1 à 8.

10. Procédé selon la revendication 9, dans lequel le procédé de surveillance d'au moins un état (S1-S5) d'un équipement d'alimentation pour véhicule électrique (1) correspond à l'une des revendications 1 à 7, et le procédé de charge d'un véhicule électrique comprend en outre les étapes :
transmission de l'ensemble de données (27) à une unité d'opérateur (30) ;
génération d'une facture sur la base de l'ensemble de données (27), de préférence par l'unité d'opérateur (30).

11. Système de surveillance (10) pour surveiller au moins un état (S1-S5) d'un équipement d'alimentation pour véhicule électrique (1) destiné à charger un véhicule électrique (2), comprenant :
au moins un élément de connexion (15) qui est configuré pour se connecter électriquement à une ligne pilote de commande (9) de l'équipement d'alimentation pour véhicule électrique (1) ou à une connexion de charge (3) pour charger le véhicule électrique (2), dans lequel la ligne pilote de commande (9) sert à une communication entre l'équipement d'alimentation pour véhicule électrique (1) et le véhicule électrique (2) ;
une unité de mesure (13) qui est configurée pour mesurer un signal électrique (11) sur la ligne pilote de commande (9) ;
une unité de détection d'état (18) qui est configurée pour détecter des états (S1-S5) de l'équipement d'alimentation pour véhicule électrique (1) sur la base du signal électrique (11) mesuré sur la ligne pilote de commande (9), dans lequel l'unité de détection d'état (18) est configurée pour distinguer au moins trois états (S1-S5) possibles différents de l'équipement d'alimentation pour véhicule électrique (1), dans lequel les au moins trois états (S1-S5) possibles différents comprennent :
- un premier état (S1) dans lequel l'équipement d'alimentation pour véhicule électrique (1) n'est pas connecté au véhicule électrique (2) via la connexion de charge (3) ;
- un deuxième état (S2) dans lequel l'équipement d'alimentation pour véhicule électrique (1) est connecté au véhicule électrique (2) et ne charge pas le véhicule électrique (2) ; et
- un troisième état (S3) dans lequel l'équipement d'alimentation pour véhicule électrique (1) est connecté au véhicule électrique (2) et charge le véhicule électrique (2) ;
une unité de minuterie (19) qui est configurée pour enregistrer une information temporelle d'état (20) des états (S1-S5) détectés, de préférence un temps de début d'état (21), un temps de fin d'état (22) et/ou une durée d'état (23) des états (S1-55) détectés ;
une unité de mémoire (25) qui est configurée pour stocker l'information temporelle d'état (20) des états (S1-S5) détectés,
**caractérisé par**
une unité de génération d'ensemble de données (26) qui est configurée pour générer des ensembles de données (27) avec des identifiants de session (28), dans lequel chaque ensemble de données (27) comprend au moins un état (S1-S5) détecté avec l'information temporelle d'état (20) respective, dans lequel l'unité de génération d'ensemble de données (26) est en outre configurée pour stocker lesdits ensembles de données (27) dans l'unité de mémoire (25), dans lequel l'information temporelle d'état (20) comprend un temps de début d'état (21) et/ou un temps de fin d'état (22),
dans lequel l'unité de génération d'ensemble de données (26) est configurée pour créer l'ensemble de données (27) lors de la détection du deuxième état (S2) et pour remplir ensuite l'ensemble de données (27) avec au moins un état (S1-S5) détecté et l'information temporelle d'état (20) respective, dans lequel l'unité de génération d'ensemble de données (26) est en outre configurée pour compléter et stocker l'ensemble de données (27) lors de la détection d'un état d'erreur (S4, S5),
un boîtier commun (34), dans lequel au moins l'unité de détection d'état (18), l'unité de minuterie (19) et l'unité de mémoire (25) sont disposées à l'intérieur du boîtier commun (34), dans lequel le boîtier commun (34) comprend des éléments de fixation pour la fixation sur ou à l'intérieur de l'équipement d'alimentation pour véhicule électrique (1).

12. Système de surveillance (10) selon la revendication 11, dans lequel le boîtier commun est scellé au moyen d'un sceau de sécurité (35).

13. Système de surveillance (10) selon l'une des revendications 11 à 12, comprenant en outre un compteur d'électricité (32), de préférence un compteur de courant continu, qui est configuré pour mesurer une quantité d'énergie électrique (E) qui est transmise par des lignes de transmission d'énergie (8) de la connexion de charge (3), de préférence dans lequel chaque ensemble de données (27) comprend en outre la quantité d'énergie électrique (E) qui est transmise entre le véhicule électrique (2) et l'équipement d'alimentation pour véhicule électrique (1) pendant l'au moins un état (S1-S5) de l'ensemble de données (27).

14. Système (50) de charge d'un véhicule électrique (2), comprenant :
un équipement d'alimentation pour véhicule électrique (1) destiné à charger un véhicule électrique (2) ;
un système de surveillance (10) pour surveiller au moins un état (S1-S5) d'un équipement d'alimentation pour véhicule électrique (1) destiné à charger un véhicule électrique (2) selon l'une des revendications 11 à 13, qui est connecté à une ligne pilote de commande (9) de l'équipement d'alimentation pour véhicule électrique (1) ou à une connexion de charge (3).

15. Système (50) selon la revendication 14, dans lequel le système comprend en outre :
une unité d'opérateur (30), de préférence incluse dans l'équipement d'alimentation pour véhicule électrique (1), qui est configurée pour transmettre des données au système de surveillance (10) pour surveiller au moins un état d'un équipement d'alimentation pour véhicule électrique (1) et/ou pour recevoir une information temporelle d'état à partir du système de surveillance (10) pour surveiller au moins un état d'un équipement d'alimentation pour véhicule électrique (1) via une interface (33) .
